# EUROPEAN PATENT SPECIFICATION

(11) **EP 0 383 929 B1**
(45) Date of publication and mention of the grant of the patent: **11.09.1996**
(21) Application number: 89907299.5
(22) Date of filing: 23.06.1989
(51) Int. Cl.: C08G 81/00

(54) **PROCESS FOR PRODUCING POLYESTER ETHER COPOLYMER**
VERFAHREN ZUR HERSTELLUNG VON POLYESTERÄTHER-COPOLYMEREN
PROCEDE DE PRODUCTION D'UN COPOLYMERE DE POLYESTER ET D'ETHER

(30) Priority: 24.06.1988 JP 157605/88; 24.06.1988 JP 157606/88
(43) Date of publication of application: 29.08.1990
(73) Proprietor: KANEGAFUCHI KAGAKU KOGYO KABUSHIKI KAISHA, Kita-ku Osaka-shi Osaka 530 (JP)
(72) Inventor: TAKANOWO, Yutaka, Kobe-shi,Hyogo-ken 655 (JP); OKINO, Ikuo, Hyogo-ku,Kobe-shi,Hyogo-ken 652 (JP); NAKATANI, Yasuhiro, Kita-ku,Kobe-shi,Hyogo-ken 651-11 (JP)
(74) Representative: VOSSIUS & PARTNER
(86) International application number: JP8900626
(87) International publication number: WO8912657

(56) References cited:
- DE-A- 2 129 993
- JP-A- 5 927 923

## Description

The present invention relates to a process for producing a polyester ether copolymer, more specifically to a copolymer producing process wherein in producing copolymer comprising polyester obtained from aromatic carboxylic acid or its alkylester and glycol, and polyether, polycondensation reaction is made after the polyester, one raw material, and the polyether, the other material were melted and mixed, or while both raw materials are melted and mixed.

As polyesterether copolymer is excellent in processability and properties, it collects attention in engineering plastic fields such as automobile and electro-electric parts industries. As the production methods, there have been known the following methods: a method for carrying out polycondensation after transesterification while polyether is allowed to coexist during transesterification between aromatic dicarboxylic acid ester and glycol; as shown in Japanese Laid-open Publication No. 198527/83, a method for carrying out polycondensation after transferring into a polycondensation vessel charged with polyether beforehand, esterified products from direct esterification between aromatic dicarboxylic acid and glycol; or as shown in Japanese Laid-open Publication No. 19696/73, a method for carrying out polycondensation by adding polyether after oligoesterification was made by adding alkylene glycol to polyester. These methods, however, contain the following problems: requirement of complicated processes and facilities caused therefrom, no avoidance of poor quality and operability decrease caused by generation of by-product polyether such as diethylene glycol due to longer reaction time, and difficulty in obtaining high polymerization degree due to higher decomposing rate during the reaction in a system of large quantity of thermally unstable polyether.

DE-OS 2 129 993 relates to a process for preparing mixed polyesters obtainable by reacting a polyester and a compound having one or more hydroxyl groups which is obtainable by polymerisation of an epoxide or by reacting an epoxide and a compound having at least one active hydrogen, under ester exchange conditions.

In light of the foregoing situation, the present inventors have made an extensive series of studies to eliminate the above problems to thus provide the present invention.

That is, the present invention relates to a polycondensation process for producing a polyester-ether copolymer which comprises
(a) adding a polyether having hydroxy groups which may optionally be esterified at the terminals and having a molecular weight of 200 or more into a polyester of 0.3 (dl/g) or more in intrinsic viscosity which has been melted beforehand or
(b) heating a polyether having hydroxy groups which may optionally be esterified at the terminals and having a molecular weight of 200 or more to 150 to 200 °C in advance in the presence of a stabilizer and adding a polyester of 0.3 (dl/g) or more in intrinsic viscosity, whereby the intrinsic viscosity is measured in a 1/1 weight ratio of phenol/tetrachloroethane at a polymer concentration of 0.25 g/dl at a temperature of 25 °C and whereby the reaction is carried out under a pressure of 0.5 to 1 mmHg abs.

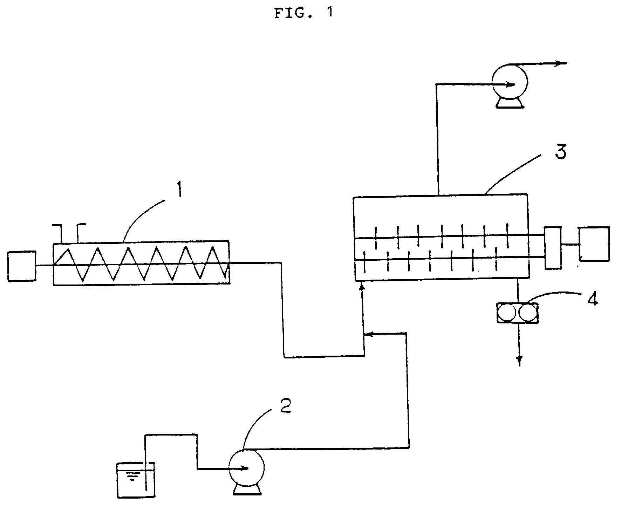

Fig. 1 is a schematic illustration showing an apparatus used in examples of the present invention.

As polyester used in the present invention, there are included a homopolymer, copolymer or mixtures thereof which are synthesized from one or more kinds of aromatic dicarboxylic acid or its alkylester and glycol. Examples of aromatic dicarboxylic acid or its alkylester include terephthalic acid, isophthalic acid, 2,6-naphthalene dicarboxylic acid, 4,4'-dicarboxyldiphenyl, 4,4'-dicarboxylbenzophenone, bis (4-carboxylphenyl) ethane, etc. or their alkylesters of methyl, ethyl or propyl, etc. Examples of glycol include ethylene glycol, propylene glycol, 1,4-butanediol, neopentylglycol and cyclohexanedimethanol, etc.

Among them, from the viewpoint of heat resistance, polyethylene terephthalate is preferable.

As polyether used in the present invention, those having a unit shown in a general formula (I) can be used: 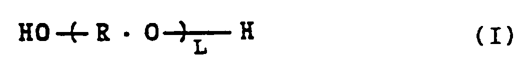 R: C₂ - C₉ alkylene groups
(In the formula, L pieces of R need not the same.)

However, among them, at least one kind shown in a general formula (II) is preferably used: 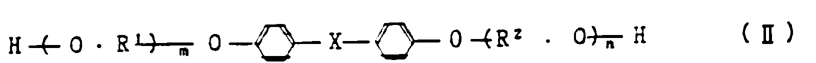 wherein R¹, R² are C₂ - C₉ alkylene groups and the sum of m and n is such that the molecular weight of the polyether is 200 or more whereby R¹ and R² can be the same or different, and X is 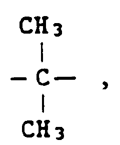 -SO₂-, - S-, -CH₂- -O -, 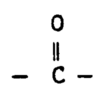 or a direct linkage. In the above equations (I) and (II), it is natural that hydroxy groups at terminals may optionally be esterified derivatives. Besides, in the equation (II), aromatics may have substituents such as halogens. In addition, in the equations (I) and (II), R, R¹ and R² are preferably C₂ - C₅ alkylene groups. Among them, substances with aromatic rings in molecular chains such as polyalkyleneoxide addition products of bisphenol A, bisphenol S, etc. are especially favorable since they can be melted and mixed at comparatively high temperatures. The molecular weight of the polyether is 200 or more, preferably 200 - 10,000. If it is below 200, the melting point of the produced polymer unfavorably lowers, while, if it is above 10,000, compatibility decrease it becomes difficult to obtain products of uniform quality. The quantity of the polyether is 1 - 60 parts by weight, preferably 5 - 35 parts by weight. If the quantity of polyether is below one part by weight, desired polymer properties cannot be obtained unfavorably, and if it is above 60 parts by weight, polyether extremely deteriorates and lowers in quality. Intrinsic viscosity of the polyester is 0.3 (dl/g) or more, preferably 0.5 (dl/g) or more. If the intrinsic viscosity is below 0.3 (dl/g), polycondensation time is prolonged unfavorably.

As a melting and mixing method of the polyester and polyether, there can be exemplified two methods: one process wherein the polyether is added into the polyester melted beforehand, and the other process wherein the polyether is heated to 150 - 200 C in advance in the presence of a stabilizer, and the polyester is added into the polyether at one time or continuously so that the both become compatible. The latter method is favorable because of being easily and rapidly melted and mixed.

In the present invention, polyester and polyether may be continuously fed and reacted, the products may be continuously discharged so that polyester ether copolymer may be continuously produced.

As a continuous feeding method of the polyester and the polyether, the following methods are exemplified: a process for directly feeding each to a reactor, a process for feeding both raw materials to a preliminary mixing vessel then feeding the mixed raw materials to a reactor, a process for feeding both to a reactor while being mixed on-line, and a process in which both raw materials are melted and mixed in advance, remelted after solidification and continuously fed to a reactor. As the reactor, a vertical type and a horizontal type are both usable, but the horizontal type is preferable due to the surface renewability and control easiness of residence time.

In this way, by melting and mixing and polycondensation of polyester and generally thermally unstable polyether in short time, stabilized copolymer can be easily produced.

As the stabilizer used in the present invention, phosphoric ester, phosphorous ester, amine compound, thioether and hindered phenol can be used singly or in combination of two or more. Among them, combined use of triphenyl phosphate and hindered phenol is preferable. The quantity of the stabilizer is preferably 0.01 - 5 parts by weight.

In the present invention, upon production of copolymer, catalysts ordinarily used for promoting reaction such as metallic oxide, carbonate, acetate, alcoholate, etc. can be used singly or in combination of two or more. The most preferable ones among them are tetra-n-butyl titanate, titanyl potassium oxalate, antimony trioxide, germanium dioxide.

In the following, the present invention is explained in more detail by way of examples, but the present invention is not limited thereto.

Various kinds of the values were according to the measurement methods below;
(1) Intrinsic viscosity (dl/g);
   Phenol/tetrachloroethane = 1/1 (ratio by weight)
   Polymer concentration = 0.25 g/dl
   Measurement temperature = 25 °C
(2) Color tone; b value according to a color-difference meter
(3) Diethylene glycol (DEG) quantity (% by weight);
   Values measured by gas chromatography after decomposition using methanol/potassium hydroxide
(4) Weight decrease ratio after heating (%);
   Values measured by thermobalance held at 280 °C x 60 min

### EXAMPLES 1 - 4

Raw materials other than polyester shown in Table 1 were charged into a reaction vessel (approximately 4 ℓ) provided with a stirrer and a gas outlet, heated up to 200 °C . Then, 100 parts of approxiamtely 3 φ strand-cut pellet-like polyester was charged at one time into the reaction vessel under normal nitrogen atmospheric pressure, heated and melted up to 260 °C to carry out polycondensation reaction under 0.5 - 1 mm Hg.abs.vacuum. The measurement results obtained on the copolymer are shown in Table 3.

**Table 1**

| | | EXAMPLE 1 | EXAMPLE 2 | EXAMPLE 3 | EXAMPLE 4 |
|---|---|---|---|---|---|
| Polyethylene terephthalate | 1) | 100 | 100 | 100 | - |
| Polybuthylene terephthalate | 2) | - | - | - | 100 |
| Polyethylene glycol | 3) | 21 | 43 | - | - |
| Bisphenol A polyethylene oxide addition product | 4) | - | - | 43 | 43 |
| Triphenyl phosphate | | 0.38 | 0.76 | 0.76 | 0.76 |
| Irganox® 1010 | 5) | 0.58 | 1.17 | 1.17 | 1.17 |
| Antimony trioxide | | 0.05 | 0.05 | 0.05 | 0.05 |

| | | | | | |
|---|---|---|---|---|---|
| Numerals in the table are expressed in parts by weight. 1) Intrinsic viscosity 0.6 dl/g | | | | | |
| 2) Intrinsic viscosity 0.8 dl/g | | | | | |
| 3) Molecular weight 1,500 | | | | | |
| 4) Molecular weight 1,000 | | | | | |
| 5) Registered trademarks, manufactured by Ciba-Geigy Co., Ltd. | | | | | |

### EXAMPLE 5

Using the same apparatus as used in EXAMPLES 1 - 4, 100 parts (parts by weight, the same hereafter) of approximately 3 φ strand-cut pellet-like polyethylene terephthalate (intrinsic viscosity 0.6 dl/g) were charged into the reaction vessel and heated and melted up to 260 °C, then keeping inside temperatures not below 240 °C, 43 parts of bisphenol A polyethylene oxide addition product (molecular weight 1,000), 0.76 part of triphenyl phosphate, 1.17 parts of Irganox® 1010 and 0.05 part of antimony trioxide were continuously added and heated up to 260 °C to carry out polycondensation reaction under 0.5 - 1 mm Hg.abs. vacuum. The measurement results obtained on copolymer are shown in Table 3.

### COMPARISON EXAMPLES 1, 4

Using the same apparatus as used in EXAMPLES, raw materials shown in Table 2 were charged at one time into the reaction vessel, the predetermined quantity of methanol was caused to distill out at approximately 200 °C, then heated up to 260°C to carry out polycondensation under 0.5 mm Hg.abs. vacuum. The measurement results obtained on copolymer are shown in Table 4.

**Table 2**

| | COMPARISON EXAMPLE 1 | COMPARISON EXAMPLE 4 |
|---|---|---|
| Dimethylterephthalate | 102 | 92 |
| Ethylene glycol | 59 | - |
| 1,4-butanediol | - | 77 |
| Bisphenol A polyethylene oxide addition product* | 43 | 43 |
| Triphenyl phosphate | 0.76 | 0.76 |
| Irganox 1010 | 1.17 | 1.17 |
| Tetra n-butyl titanate | 0.035 | 0.035 |

| | | |
|---|---|---|
| * Molecular weight 1,000 | | |

### COMPARISON EXAMPLE 2

Using the same apparatus as used in EXAMPLES, except that it was additionally provided with a rectifying tube, as the first step, a slurry of 36.4 parts of terephthalic acid and 16.4 parts of ethylene glycol were continuously added to 52.8 parts of bishydroxyethyl terephthalate pentamer for approximately 3 hours with the inside temperature held at 240 °C to distill out the predetermined quantity of water by rectification. Then, 43 parts of bisphenol A polyethylene oxide addition product (molecular weight 1,000), 0.76 part of triphenyl phosphate, 1.17 part of Irganox-1010® and 0.05 part of antimony trioxide were added and heated to 260 °C to carry out polycondensation under 0. 5 mm Hg.abs. vacuum. The measurement results obtained on copolymer are shown in Table 4.

### COMPARISON EXAMPLE 3

Using the sane apparatus as used in EXAMPLES, 100 parts of polyethylene terephthalate tips (intrinsic viscosity 0.6 dl/g), 135 parts of ethylene glycol and 0.099 part of zinc acetate were charged into the reaction vessel and oligoesterified with ethylene glycol circulated for 1 hour at 200 °C, then 43 parts of polyethylene glycol (molecular weight 1,500), 0.76 part of triphenyl phosphate, 1.17 parts of Irganox®-1010 and 0.05 part of antimony trioxide were charged and heated to 260 °C to carry out polycondensation under 0.5 mm Hg.abs. vacuum. The measurement results obtained on copolymer are shown in Table 4.

**Table 3**

| | EX. 1 | EX. 2 | EX. 3 | EX. 4 | EX. 5 |
|---|---|---|---|---|---|
| Reaction time (including temperature elevation and melting) | 1.6 | 1.8 | 1.7 | 1.8 | 2.6 |
| Intrinsic viscosity (dl/g) | 0.76 | 0.80 | 0.80 | 1.00 | 0.80 |
| Intrinsic viscosity decrease per one hour (ΔIV/Hr) | 0.003 | 0.005 | 0.007 | 0.001 | 0.005 |
| Color tone | 3.0 | 3.9 | 3.7 | 3.5 | 3.7 |
| DEG quantity (% by weight) | 0.8 | 0.9 | 0.9 | 0 | 0.9 |
| Weight decrease ratio after heating (%) | 3.3 | 6.4 | 4.3 | 4.7 | 5.9 |

**Table 4**

| | COMP. EX.1 | COMP. EX.2 | COMP. EX.3 | COMP. EX.4 |
|---|---|---|---|---|
| Reaction time (Total) | 6.5 | 7.5 | - | 7.0 |
| Time from transesterification and esterification to completion of polycondensation | 3.5 | 3.3 | 4.5 | 3.3 |
| Intrinsic viscosity (dl/g) | 0.80 | 0.80 | 0.80 | 1.00 |
| Intrinsic viscosity decrease per one hour (ΔIV/Hr) | 0.018 | 0.015 | 0.020 | 0.011 |
| Color tone | 4.5 | 4.0 | 4.8 | 3.9 |
| DEG quantity (% by weight) | 1.3 | 1.1 | 2.1 | 0 |
| Weight decrease ratio after heating (%) | 9.5 | 8.9 | 9.0 | 7.8 |

### EXAMPLE 6

Using an apparatus as shown in Fig. 1, 100 parts (parts by weight, the same hereafter) of polyethylene terephthalate, 0.23 part of hindered phenol type stabilizer and 0.15 part of triphenyl phosphate were extruded by an extruder (1), 5.26 parts of bisphenol A polyethylene oxide addition product (molecular weight approximately 1,000) were continuously supplied by a pump (2) and the resulting product was continuously discharged by a pump (4), so that their residence time in a reactor (3) amounted to 15 minutes, The temperature of contents and vacuum inside the reaction vessel were 275 °C and 0.5 - 1 mm Hg.abs, respectively. The results are shown in Table 5.

### EXAMPLE 7

Using the same apparatus as used in EXAMPLE 6, 100 parts of polyethylene terephthalate, 1.17 parts of hindered phenol type stabilizer and 0.76 part of triphenyl phosphate were extruded by the extruder (1), 43 parts of bisphenol A polyethylene oxide addition product (molecular weight approximately 1,000) were continuously supplied by the pump (2) and the resulting product was continuously discharged by a pump (4), so that their residence time in the reactor (3) amounted to 25 minutes. The temperature of contents and vacuum inside the reaction vessel were 270 °C and 0.5 - 1 mm Hg.abs, respectively. The results are shown in Table 5.

### EXAMPLE 8

The procedure was conducted in the same manner as EXAMPLE 7, except that the residence time in the reaction vessel was changed to 40 minutes. The results are shown in Table 5.

### COMPARISON EXAMPLE 5

Using a reaction vessel (approximately 4 ℓ) provided with a stirrer and a gas outlet, 105 parts of bishydroxyethyl terephthalate pentamer were charged and heated to 260 °C, and then under normal atmospheric pressure 5.25 parts of bisphenol A polyethylene oxide addition product (molecular weight 1,000), 0.23 part of hindered phenol type stabilizer, 0.15 part of triphenyl phosphate and 0.05 part of antimony trioxide were charged and heated to 275 °C to carry out polycondensation for 120 minutes under 0.5 - 1 mm Hg.abs. vacuum. The results are shown in Table 5.

### COMPARISON EXAMPLE 6

Using the same apparatus as in COMPARATIVE EXAMPLE 5, 105 parts of bishydroxyethyl terephthalate pentamer were charged and heated to 260 °C, and then under normal atmospheric pressure 43 parts of bisphenol A polyethylene oxide addition product (molecular weight 1,000), 1.17 parts of hindered phenol type stabilizer, 0.75 part of triphenyl phosphate and 0.05 part of antimony trioxide were charged and heated up to 270 °C to carry out polycondensation for 200 minutes under 0.5 - 1 mm Hg.abs. vacuum. The results are shown in Table 5.

### COMPARISON EXAMPLE 7

The procedure was conducted in the same manner as in COMPARISON EXAMPLE 6, except that the polycondensation time was changed to 300 minutes. The results are shown in Table 5.

**Table 5**

| | EX. 6 | EX. 7 | EX. 8 | COMP. EX. 5 | COMP. EX. 6 | COMP. EX. 7 |
|---|---|---|---|---|---|---|
| Reaction time (min) | 15 | 20 | 40 | 120 | 200 | 300 |
| Intrinsic viscosity (dl/g) | 0.59 | 0.80 | 0.91 | 0.60 | 0.80 | 0.77 |
| Intrinsic viscosity decrease per one hour (ΔIV/Hr) | 0.004 | 0.005 | 0.005 | 0.010 | 0.025 | 0.055 |
| Color tone | 2.4 | 3.7 | 3.5 | 2.5 | 4.0 | 7.8 |
| DEG quantity (% by weight) | 0.9 | 0.6 | 0.6 | 0.9 | 1.1 | 2.7 |
| Weight decrease ratio after heating (% by weight) | 4.8 | 6.2 | 6.4 | 5.2 | 8.9 | 13.4 |

### POSSIBILITY OF INDUSTRIAL UTILIZATION

As explained above, the present invention has various advantages as follows, and greatly contributes to industry:
(1) Since polyester is used as raw material, an esterification process is not required.
(2) The quantity of polyether by-product is small owing to shortened reaction time. Moreover, deterioration of polymer during production is not only suppressed owing to reduced thermal history of polyether, but production of comparatively high IV products is easily made possible.
(3) Since production time is extraordinarily shortened and operation cycle becomes fast to thus enhance productivity greatly.
(4) By adopting a continuous reaction and discharge process, the residence of the product in a reaction vessel upon discharge is eliminated, and polymerization degree does not lower at this instant.

## Claims

1. A polycondensation process for producing a polyester-ether copolymer which comprises
(a) adding a polyether having hydroxy groups which may optionally be esterified at the terminals and having a molecular weight of 200 or more into a polyester of 0.3 (dl/g) or more in intrinsic viscosity which has been melted beforehand or
(b) heating a polyether having hydroxy groups which may optionally be esterified at the terminals and having a molecular weight of 200 or more to 150 to 200 °C in advance in the presence of a stabilizer and adding a polyester of 0.3 (dl/g) or more in intrinsic viscosity, whereby the intrinsic viscosity is measured in a 1/1 weight ratio of phenol/tetrachloroethane at a polymer concentration of 0.25 g/dl at a temperature of 25 °C and whereby the reaction is carried out under a pressure of 0.5 to 1 mmHg abs.

2. The process of claim 1, wherein the main chain of the polyether is expressed by a general formula (I), 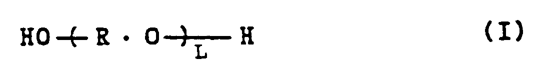 wherein R is C₂-C₉ alkylene and L is defined such that the molecular weight of the polyether is 200 or more, whereby R can be the same or different in each of the L units.

3. The process of claim 1, wherein the main chain of the polyether is expressed by a general formula (II), 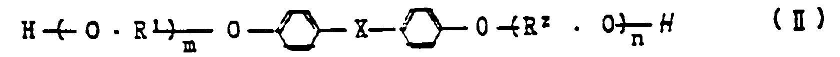 wherein R¹ and R² are C₂ - C₉ alkylene and the sum of m and n is such that the molecular weight of the polyether is 200 or more, whereby R¹ and R² can be the same or different in each of the (m+n) units, and
X is 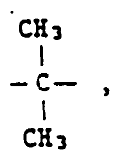 - SO₂ - , - S - , - CH₂ - - O -, 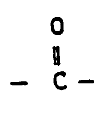 or a direct linkage.

4. The process of claim 1, 2 or 3, wherein the polyether has a molecular weight of 200 - 10000.

5. The process of claim 1, wherein the polyester is a ) homopolymer, copolymer or mixtures thereof which are obtainable by synthesizing at least one member of the group terephthalic acid, isophthalic acid, 2,6-naphthalene dicarboxylic acid, 4,4'-dicarboxyl diphenyl, 4,4'-dicarboxyl benzophenone, bis (4-carboxylphenyl) ethane and their alkylesters of ethyl, methyl and propyl with at least one member of the group ethylene glycol, propylene glycol, 1,4-butanediol, neopentyl glycol, diethylene glycol and cyclohexane dimethanol.

6. The process of claim 1 or 5, wherein the polyester is polyethylene terephthalate.

7. The process of claim 1, 5 or 6, wherein the polyester is in a form of pellet, or flake or powder obtained from crushing.

8. The process of claim 1, 5, 6 or 7, wherein after or while adding the polyester into the polyether heated beforehand to melt and mix them, polycondensation is conducted.

9. The process of claim 1, wherein at least one kind of stabilizer is used which is selected from phosphoric ester, ester phosphite, amine compound, thioether and hindered phenol.

10. The process of claim 1, wherein polycondensation is conducted continuously.

## Patentansprüche

1. Polykondensationsverfahren zur Herstellung eines Polyesterether-Copolymeren, welches umfaßt
(a) Zugabe eines hydroxygruppenhaltigen Polyethers, dessen Endgruppen gegebenenfalls verestert sein können und der ein Molekulargewicht von 200 oder mehr aufweist, zu einem zuvor geschmolzenen Polyester mit einer Grenzviskosität von 0.3 (dl/g) oder mehr oder
(b) vorher Erwärmung eines hydroxygruppenhaltigen Polyethers, dessen Endgruppen gegebenenfalls verestert sein können und der ein Molekulargewicht von 200 oder mehr aufweist, auf 150 bis 200 °C in Anwesenheit eines Stabilisators und Zugabe eines Polyesters mit einer Grenzviskosität von 0.3 (dl/g) oder mehr, wobei die Grenzviskosität in Phenol/Tetrachlorethan mit einem Gewichtsverhältnis von 1/1 bei einer Temperatur von 25 °C und mit einer Polymerkonzentration von 0.25 g/dl bestimmt wird und wobei die Umsetzung unter einem Absolutdruck von 0.5 bis 1 mmHg ausgeführt wird.

2. Verfahren gemäß Anspruch 1, wobei die Hauptkette des Polyethers durch die allgemeine Formel (I) wiedergegeben wird, 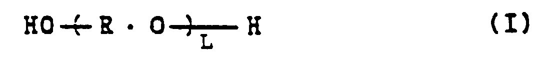 in der R einen C₂-C₉-Alkylenrest bedeutet und L so festgelegt ist, daß das Molekulargewicht des Polyethers 200 oder mehr beträgt, wobei R in jeder der L-Einheiten gleich oder verschieden sein kann.

3. Verfahren gemäß Anspruch 1, wobei die Hauptkette des Polyethers durch die allgemeine Formel (II) wiedergegeben wird, 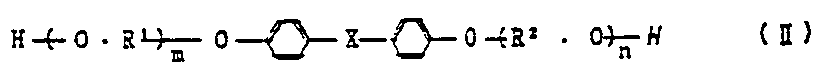 in der R¹ und R² einen C₂-C₉-Alkylenrest bedeuten und die Summe von m und n so groß ist, daß das Molekulargewicht des Polyethers 200 oder mehr beträgt, wobei R¹ und R² in jeder der (m+n)-Einheiten gleich oder verschieden sein können und X 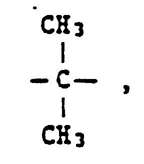 -SO₂-, - S -, -CH₂- -O - , 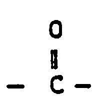 oder eine direkte Bindung bedeutet.

4. Verfahren gemäß Anspruch 1, 2, oder 3, wobei der Polyether ein Molekulargewicht von 200-10000 hat.

5. Verfahren gemäß Anspruch 1, wobei der Polyester ein Homopolymer, Copolymer oder Gemische davon bedeutet, die durch Umsetzung mindestens eines Mitglieds der Gruppe, bestehend aus Terephthalsäure, Isophthalsäure, 2,6-Naphthalendicarbonsäure, 4,4'-Dicarboxyldiphenyl, 4,4'-Dicarboxylbenzophenon, Bis(4-carboxylphenyl)ethan und ihren Alkylestern von Ethyl, Methyl oder Propyl, und mindestens einem Mitglied der Gruppe, bestehend aus Ethylenglycol, Propylenglycol, 1,4-Butandiol, Neopentylglycol, Diethylenglycol und Cyclohexandimethanol, erhältlich sind.

6. Verfahren gemäß Anspruch 1 oder 5, wobei der Polyester Polyethylenterephthalat ist.

7. Verfahren gemäß Anspruch 1, 5 oder 6, wobei der Polyester in Form von Pellets, Flocken oder eines durch Verkleinern erhaltenen Pulvers vorliegt.

8. Verfahren gemäß Anspruch 1, 5, 6 oder 7, wobei die Polykondensation ausgeführt wird, nachdem der Polyester zu dem Polyether, der vorher erhitzt wurde, um diese zu schmelzen und zu mischen, gegeben wurde oder während er zugegeben wird.

9. Verfahren gemäß Anspruch 1, wobei mindestens eine Art von Stabilisator, ausgewählt aus Phosphorsäureester, Phosphorigsäureester, Aminverbindung, Thioether und gehindertem Phenol, verwendet wird.

10. Verfahren gemäß Anspruch 1, wobei die Polykondensation kontinuierlich ausgeführt wird.

## Revendications

1. Procédé de polycondensation pour produire un copolymère de polyester et d'éther qui comprend :
(a) l'addition d'un polyéther ayant des radicaux hydroxyles qui peuvent facultativement être estérifiés aux extrémités et ayant un poids moléculaire de 200 ou plus à un polyester de 0,3 (dl/g) ou plus en viscosité intrinsèque qui a été fondu au préalable ou
(b) le chauffage d'un polyéther ayant des radicaux hydroxy qui peuvent être facultativement estérifiés aux extrémités et ayant un poids moléculaire de 200 ou plus à 150 à 200°C par avance en présence d'un stabilisant et l'addition d'un polyester de 0,3 (dl/g) ou plus en viscosité intrinsèque, la viscosité intrinsèque étant mesurée dans un mélange phénol/tétrachloroéthane dans un rapport en poids de 1/1 à une concentration de polymère de 0,25 g/dl à une température de 25°C, et où la réaction est effectuée sous une pression de 0,5 à 1 mm Hg abs.

2. Procédé selon la revendication 1 dans lequel la chaîne principale du polyéther est exprimée par la formule générale (I)
HO--(-R.O-)_{L}--H
dans laquelle R est un alcoylène en C₂-C₉ et L est défini pour que le poids moléculaire du polyéther soit de 200 ou plus, R pouvant être identique ou différent dans chacune des unités de L.

3. Procédé selon la revendication 1 dans lequel la chaîne principale du polyéther est exprimée par une formule générale (II) 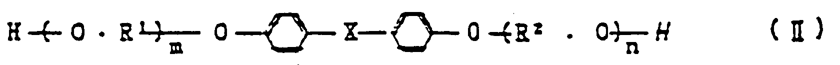 dans laquelle R¹ et R² sont des radicaux alcoylènes en C₂-C₉ et la somme de m et n est telle que le poids moléculaire du polyéther est 200 ou plus, et où R¹ et R² peuvent être dans chacune des unités (m+n)
identiques ou différents, et X est -C(CH₃)₂-, -SO₂-, -S-, -CH₂-, -O-, -C(=O)- ou une liaison directe.

4. Procédé selon la revendication 1, 2 ou 3 dans lequel le polyéther a un poids moléculaire de 200-10000.

5. Procédé selon la revendication 1 dans lequel le polyester est un homopolymère, un copolymère ou des mélanges de ceux-ci qui sont susceptibles d'être obtenus en synthétisant au moins un membre du groupe composé de l'acide téréphtalique, l'acide isophtalique, l'acide 2,6-naphtalènedicarboxylique, le 4,4'-dicarboxydiphényle, la 4,4'-dicarboxybenzophénone, le bis(4-carboxyphényl)-éthane et leurs alcoylesters d'éthyle, de méthyle et de propyle avec au moins un membre du groupe composé de l'éthylène-glycol, du propylèneglycol, du 1,4-butanediol, du néopentylglycol, du diéthylèneglycol et du cyclohexanediméthanol.

6. Procédé selon la revendication 1 ou 5, dans lequel le polyester est le téréphtalate de polyéthylène.

7. Procédé selon la revendication 1, 5 ou 6 dans lequel le polyester est sous forme de boulettes, ou de flocons ou de poudre obtenus par broyage.

8. Procédé selon la revendication 1, 5, 6 ou 7 dans lequel, après, ou pendant l'addition du polyester au polyéther chauffé au préalable pour le fondre et les mélanger, la polycondensation est effectuée.

9. Procédé selon la revendication 1 dans lequel au moins une sorte de stabilisant est utilisée qui est choisie parmi le groupe composé d'ester phosphorique, de phosphite d'ester, de composé amine, de thioéther ou de phénol à encombrement stérique.

10. Procédé selon la revendication 1 dans lequel la polycondensation est effectuée sans interruption.
